Europäisches Patentamt

European Patent Office

Office européen des brevets

(11) Publication number: 0 216 445
A1

# EUROPEAN PATENT APPLICATION

(21) Application number: 86304729.6

(22) Date of filing: 19.06.86

(51) Int. Cl.⁴: A61C 13/265 , A61C 19/04

(30) Priority: 15.08.85 US 765811

(43) Date of publication of application:
01.04.87 Bulletin 87/14

(84) Designated Contracting States:
AT BE CH DE FR GB IT LI LU NL SE

(71) Applicant: Zuest, Max
595 San Fernando
San Diego California 92106(US)
Applicant: Zuest, Paul
13531 Orange Blossom Lane
Poway California 92064(US)

(72) Inventor: Zuest, Max
595 San Fernando
San Diego California 92106(US)
Inventor: Zuest, Paul
13531 Orange Blossom Lane
Poway California 92064(US)

(74) Representative: Wilson, Nicholas Martin et al
WITHERS & ROGERS 4 Dyer's Buildings
Holborn
London EC1N 2JT(GB)

(54) Denture attachment structure and method.

(57) An attachment structure for securing a denture
in an oral cavity comprises a pin member (18) for
securing to the denture and an open-sided channel
member (16) for mounting in a cut-out in an existing
tooth. The pin member has a head (22) at one end
which is a snap fit in a socket (20) at the cor-
responding end of the channel member, the head
and socket being elongated in a direction transverse
to the longitudinal axis of the pin and socket mem-
bers and preferably of barrel-like shape.

FIG. I

## DENTURE ATTACHMENT STRUCTURE AND METHOD

### BACKGROUND OF THE INVENTION

The present invention relates to a denture attachment structure or anchor for anchoring a denture in an oral cavity, and to a method for securing the structure to an existing tooth or teeth.

In our co-pending application Serial No. 85308830.0 which is entitled "Snap-In Anchor for Denture" an anchor is described which comprises a pin member secured to a denture and a channel member retained in an existing tooth. The pin member has a ball at one end which is a snap fit in a correspondingly shaped socket at the end of the channel member. The pin member is a frictional sliding fit in the channel member and is retained in place by the resilient side walls of the channel member. The arrangement allows limited side to side movement of the denture to accommodate jaw motions so as to reduce the stress on the tooth or teeth to which the denture is anchored.

In other denture attachment structures the securing means usually involves a groove or channel formed in a ceramic or metal crown cemented on the existing teeth and a matching tongue or pin built into the denture, which slides into the channel as the denture is fitted. An attachment of this type is shown, for example, in U.S. Patent No. 4,362,509 of Sulc. This type of attachment is fairly expensive and often involves resilient inserts to allow very limited movement of the denture. The inserts are subject to wear.

### BACKGROUND OF THE INVENTION

According to one aspect of the present invention an attachment structure or anchor assembly is provided for securing a denture in an oral cavity, which comprises an open-sided sleeve or channel member with a socket at one end for securing directly in a cut-out in an existing tooth, and a pin member with a head at one end shaped to be a snap fit in the socket. The pin member is secured to the denture, and the denture is anchored to the existing tooth by sliding the pin member into the sleeve and snapping the head into the socket. The sleeve has resilient side walls which grip the pin member for stability but allow very limited movement of the denture to accommodate jaw motions. According to the present invention the socket and head are elongated in a direction transverse to the longitudinal axis of the channel and pin members, i.e. transverse to the path of insertion of the pin member in the channel member. This provides a greater retention force than a ball and socket type of attachment, so that the overall dimensions of the attachment structure can be reduced. Thus this type of attachment structure is particularly suitable for attachment to relatively small teeth such as bicuspids, since the channel and pin members can be shorter while the positive snap engagement between the transversely elongated head and socket provides sufficient retentive force to retain the denture in place during normal jaw motions.

Preferably, the socket and head are of corresponding barrel-like shape. The channel and pin members may be of any suitable cross sections for providing a frictional sliding fit between the members, but the channel member preferably has a flat back wall so that it is less invasive of the tooth in which it is retained. The pin member will then have a corresponding flat front face for engaging the back wall of the channel member when it slides into place. The channel member preferably has inturned side walls for resiliently gripping the pin member and also for helping to retain the channel member in the tooth.

According to another aspect of the present invention a method is provided for mounting a denture in an oral cavity. A pin member having a head at one end is secured to one end of the denture. The pin member is releasably secured to a corresponding open-sided channel member by sliding it into the channel member until its head snap fits into a corresponding socket at the end of the channel member. A vertically extending cut-out is formed in the side face of a tooth facing the site at which the denture is to be mounted, the cut-out being shaped to correspond to the shape of the channel member. Bonding material is then placed in the tooth cut-out and preferably also on at least the lower end of the sleeve member. The sleeve member carrying the attached denture via the pin member is then inserted into the cut-out so that the denture is properly aligned in the oral cavity.

Partial dentures may involve two or more attachment structures for anchoring them to existing teeth. For example, a single row of teeth in a denture may have a pin member secured at each end which is retained in the manner described above in channel members secured in cut-outs in adjacent existing teeth. Dentures may involve teeth on opposite sides of the arch, with attachment structures for securing the denture to adjacent teeth on each side of the arch.

In such cases the dentist must maintain proper parallel alignment of the attachment structures or anchors in both the vertical and horizontal planes as they are secured to the existing teeth, to ensure that the denture seats accurately and can be mounted and removed relatively easily.

According to another aspect of the present invention a paralleling tool is provided to aid in the accurate alignment of two attachment structures at spaced positions in an oral cavity. The tool comprises an elongate slider member and at least two clamp devices projecting transversely from the slider member and parallel to one another. The clamp devices each have a clamp head at one end for releasably gripping an attachment structure or anchor such that its pin and channel member extend parallel to those of an attachment structure gripped in the clamp head of the other clamp device. The clamp devices are slidably mounted in the slider member so that they are slidable both along and transverse to the slider member. Releasable locking devices are provided for locking the clamp devices against sliding movement once the correct relative position between the two clamp heads has been found. Preferably a suitable handle projects from the slider member to allow the user to operate the tool more easily.

In order to use the paralleling tool the dentist first prepares the necessary cut-outs in the existing teeth to which the denture is to be mounted. This can initially be done roughly by eye so that the cut-outs are roughly parallel to each other and to the planned path of insertion of the denture. Suitable bonding material is placed in the cut-outs.

Two anchors or attachment structures are secured to the appropriate end teeth of the denture by means of the pin members which have projecting tongues embedded in the end teeth. The pin members slide into corresponding channel members until their heads snap into the respective sockets. The paralleling tool is then secured to the respective attachment structures, preferably by means of vertical projections from the pin members which can be secured in the clamp heads. The clamping devices can be moved back and forth along the slider member and transversely across it until the clamp heads are in the correct relative positions for engagement with the respective anchors. The paralleling tool will then ensure that the pin and channel members are retained in the correct alignment in both the vertical and horizontal plane as the denture is mounted. A suitable filling material can be used if necessary to adjust the cut-outs until any space around the channel members is filled.

Any further attachment structures can be mounted in a similar manner. A first attachment structure may be placed by sight, with any additional attachment structures being aligned with the first using the paralleling tool as outlined above.

Thus according to the present invention a denture attachment structure and method is provided which allows a positive snap lock between the denture and adjacent teeth while allowing limited movement of the denture with jaw motions, and which allows the dimensions of the necessary cut-out in an existing tooth to which the denture is to be anchored to be reduced, thus allowing it to be anchored securely to relatively small teeth such as bicuspids.

## BRIEF DESCRIPTION OF THE DRAWINGS

The above and other aspects of the present invention will be more clear from the following detailed description of a preferred embodiment of the present invention, taken in conjunction with the accompanying drawings, in which like reference numerals refer to like parts and in which:

Figure 1 is a perspective view of the channel and pin members of an attachment structure according to a preferred embodiment of the present invention;

Figure 2 is a side elevation view, with portions cut away, showing the channel and pin members installed to anchor a denture to an existing tooth;

Figure 3 is a sectional view on the line 3-3 of Figure 2;

Figure 4 is a perspective view of a paralleling tool for aligning two of the attachment structures for mounting a denture in an oral cavity;

Figure 5 is a front view of the tool with two attachment structures inserted;

Figure 6 is a sectional view taken on the line 6-6 of Figure 5; and

Figure 7 is a top plan view showing an alternative assembly of the paralleling tool.

## DESCRIPTION OF THE PREFERRED EMBODIMENT

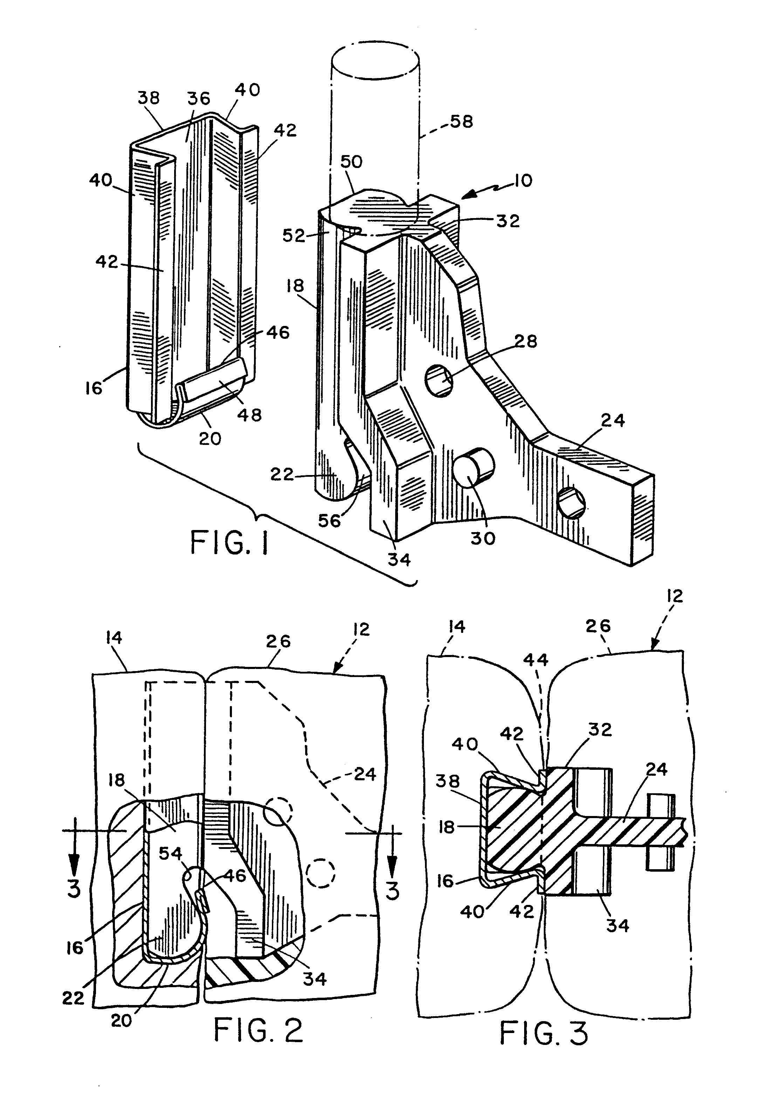

Figures 1 to 3 show a preferred embodiment of a denture attachment structure or anchor 10 according to one aspect of the present invention for anchoring one end of a denture 12 to an existing tooth 14. The denture may be full or partial, and include teeth on one or both sides of the arch. One or more of the attachment structures shown in Figures 1 to 3 may be used to anchor one or more respective end teeth of the denture to adjacent existing teeth in the manner described below.

As best shown in Figure 1, the attachment structure is in two parts, comprising an open-sided channel or sleeve member 16 and a pin or anchor member 18 for frictional sliding engagement in the channel member 16. An upwardly facing socket 20 is provided at the lower end of channel member 16, and a head 22 at the lower end of pin member 18 is designed to be a snap fit in the socket 20.

The head and socket are elongated transverse to the longitudinal axes of the pin and channel members, and are preferably of barrel-like or part cylindrical shape as shown in the drawings. When the pin member is fully engaged in the channel member as shown in Figure 2, limited rocking movement is provided between the two members about the longitudinal pivot axis of the head and socket, as will be explained in more detail below.

The pin member 18 has a radially projecting retaining tongue 24 which is embedded in an end artificial tooth 26 of a denture so that the pin member projects to one side of the end face of the tooth. Suitable holes 28 and studs 30 are provided on the tongue to provide maximum contact and interengagement with the material of the denture as it sets. Any suitable number and arrangement of studs and holes may be provided in the tongue 24.

A transverse end wall 32 is provided between the tongue and pin member which is arranged to lie flush with the end face of tooth 26 when the tongue is embedded in the tooth , as shown in Figures 2 and 3. The end wall extends along a portion of the pin member with an offset portion 34 at its lower end spaced radially from the pin member to clear the head 22.

The channel member 16 defines a channel 36 for receiving and retaining the pin member between flat back wall 38 and inturned or indented side walls 40. Outwardly turned flanges 42 at the outer edges of side walls 40 are arranged to lie substantially flush against the end wall 44 of an existing tooth in which the channel member is secured, as best shown in Figure 3. The socket 20 is preferably formed by a turned up extension of back wall 38. The extension is curved upwardly and indented at its upper end 46 for a snap engagement to retain the head 22 against accidental separation. The extension may be suitably bonded or welded at each side to adjacent portions of the side flanges 42.The weld preferably extends at least 2/3 of the way between the lower and upper ends of the socket. The upper end 46 may have a folded back lip 48 as shown to add strength to the upper edge of the socket for retaining the head in the socket.

The channel member is preferably made from thin relatively resilient material such as stainless steel, and the pin or anchor member is preferably of a suitable plastics material such as nylon.

The pin member 18 may be of any suitable cross-sectional shape for frictional sliding engagement in the channel member. In the preferred embodiment shown in Figures 1 to 3 it has a flat front face 50 for engagement with the flat back wall of the channel, and rounded or part cylindrical side faces 52 for retention behind the inturned side walls 40 of the channel member, as shown in Figure 3. The pin member, end wall and tongue may be formed as a one piece integral moulding. The head 22 comprises a part cylindrical formation at the lower end of the pin member formed by an indent 54 and outwardly rounded portion 56 facing offset portion 34 of the end wall 32. The pin member preferably has an upwardly extending projection 58 of rounded cross section, as shown in dotted outline in Figure 1, to aid in initial insertion and alignment of a denture in an oral cavity, as described in more detail below.

The fully seated connection between the channel and pin members is shown in Figures 2 and 3. The channel member is secured in a suitably prepared cut-out in an existing tooth adjacent the denture site, with the inturned side walls 40 having a wedge-like engagement with the surrounding tooth or filling material to aid in retaining the channel member in the tooth. The offset portion 34 of end wall 32 is designed to allow sufficient clearance for the socket 20 when the head 22 is snapped into it as shown in Figure 2.

When the pin and channel members are fully seated as shown in Figures 2 and 3, the side walls 40 of the channel resiliently grip the pin member in place, with the socket and head having a pivotal engagement allowing a very limited amount of relative lateral movement of the denture to accommodate jaw motions during chewing, the snap fit between the socket and head preventing accidental separation of the members but at the same time allowing the denture to be removed and replaced for cleaning or repair. Because of the transverse barrel-like shape of the pin and socket, providing an elongated line of retention transverse to the path of insertion of the pin member and denture, and thus also transverse to the line of connection between the denture and existing tooth, the channel and pin members can be shorter in the longitudinal or vertical direction while still providing sufficient retention force to avoid or reduce the risk of accidental separation. Thus the overall dimensions of the attachment structure can be reduced, making it easier to insert in smaller teeth such as bicuspids. The attachment structure may in fact be one third or more smaller in all dimensions than an attachment structure of the type involving a spherical ball and socket connection. The flat back face of the channel member and the reduced overall dimensions make it less invasive of the existing tooth in which it is mounted and thus less likely to cause inflammation or other problems.

If necessary, an additional retaining sleeve may be provided for retaining the channel member 16 in the tooth more securely. This would be shaped to slide over the back wall and indented side walls of the channel member and have a rearwardly projecting flat lug or tab adjacent its top end which would project into a corresponding cut-out in the top face of the tooth. The cut-out could then be filled with suitable filling material to secure the lug, with the indented side walls of the retaining sleeve providing additional security against the channel member pulling out of the tooth. The retaining sleeve is preferably shorter than the channel member and slides over it until the lug engages in the tooth cutout. Once the parts are correctly positioned, the channel member can be cut to the appropriate length. The lug may also be shortened if necessary according to the dimensions of the tooth. The lug may have openings or studs for maximum engagement with the surrounding filling material.

A method of mounting a denture in an oral cavity using an attachment structure of this type will now be described. The attachment structure is designed to be placed in a Class II amalgam preparation cut into molar or bicuspid teeth. If necessary, the tooth to which the structure is to be secured can be extended mesially or distally with a composite material to accommodate the depth of the attachment structure. The tooth need not be a natural tooth but may be a crown or other substitute, for example.

A cut-out is made in the side face of a tooth adjacent the site at which the denture is to be mounted, the cut-out corresponding in shape and dimensions substantially with the shape of the channel member, which may be the same as shown in Figures 1 to 3 of the drawings or of other shapes and dimensions. The cut-out need not have indented side walls to correspond to the indented side walls of the channel, but may be of square or rectangular section with the wedge shaped gaps being filled with a suitable filling or bonding material.

The cut-out should be aligned as closely as possible with the path of insertion of the planned prosthesis, and this may be done by eye. The cut out is made according to standard dental techniques for filling preparations. A small amount of a suitable bonding material, preferably a light and/or chemical cured composite resin, is then placed on the gingival floor and pulpal wall of the tooth preparation. The resin is also packed on the bottom face and into the lateral indent on the side walls of the channel member. Preferably a minimum of bonding material is used in the indent to allow for the resilient action of the side walls retaining the pin member in the channel.

The pin member is then snapped into the channel member, making sure that the pin member is flush against the rear wall of the channel member. The channel member is then seated into the tooth cut-out and aligned with the proper path of prosthesis insertion. This may be done by gripping a suitable extension such as extension 58 shown in Figure 1 on the pin member, either by hand or using a suitable tool. Once the denture is correctly positioned, the initially placed resin or bonding material is polymerized or cured according to the manufacturer's instructions to stabilize the attachment structure. The resin material is then built-up and cured in layers until filling of the cut out is complete.

Once the attachment structure and denture are correctly positioned and secured, the top of the metallic channel member and plastic pin member may be reduced with a suitable grinding tool until they conform into proper occlusion with the composite resin material. Over contouring may be necessary for proper shaping of the occlusal faces. Prior to this step any upward extension or projection on the pin member to aid in initial mounting of the attachment structure will be sheared or cut off.

The above description relates to securing a single attachment structure to an existing tooth. It will be understood that it is not limited to attachment structures or anchors as shown in Figures 1 to 3, but may be used in attaching any denture to a tooth via a channel member and snap in anchor.

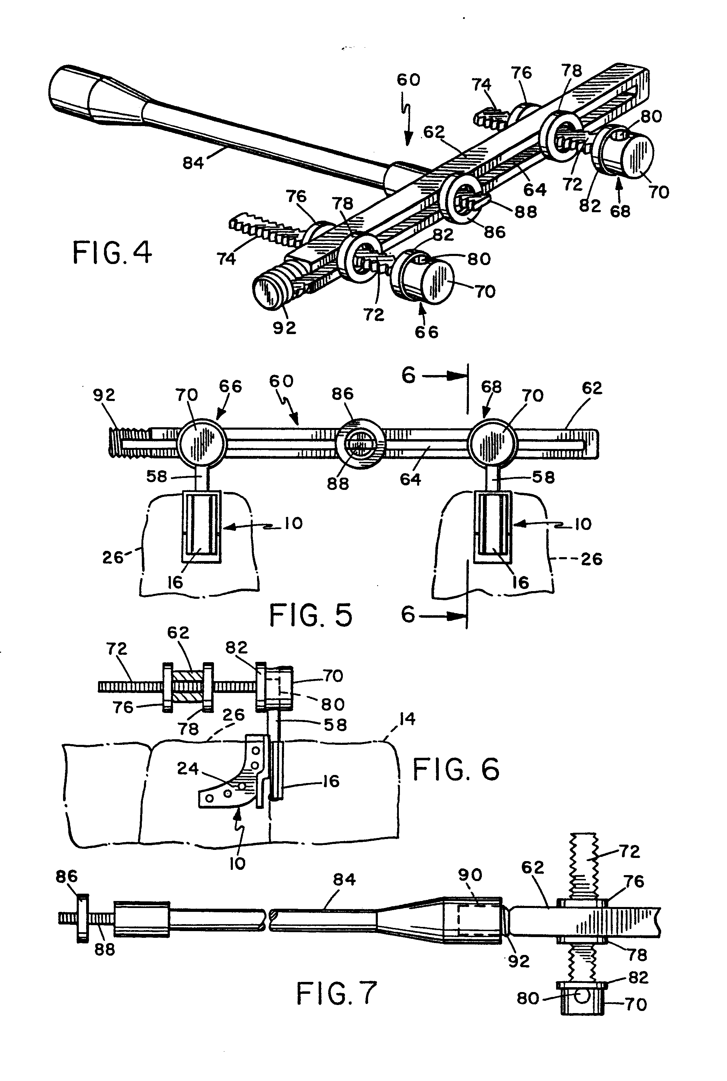

Where more than one attachment structure is used with a single prosthesis, a paralleling tool as shown in Figures 4 to 7 of the drawings can be used to align the additional attachment structures in both the horizontal and vertical planes. A denture may, for example, involve teeth on one or both sides of the arch and may be anchored to one or more existing teeth on one or both sides of the mouth. It is quite difficult to ensure that two or more attachment structures are correctly aligned with each other and with the planned path of insertion of the denture by eye alone, and any misalignment can cause problems in placement and subsequent removal of the denture.

As best shown in Figure 4, the paralleling tool 60 basically comprises a slider member 62 having a longitudinal flattened slot 64, and a pair of clamping devices 66,68 extending transversely through the slot 64. The clamping devices 66 and 68 are of unequal length and each comprise a clamp head 70 at one end and a flat shaft 72 projecting from the head 70 through the slot 64. The shafts have teeth 74 along their opposite side edges and are retained in the slot 64 via pairs of locking washers 76,78 with opposite hand screw threads positioned on the respective shafts on opposite sides of the slider member 62. Each clamp head 70 has a vertical through bore 80 and a further locking washer 82 is mounted on each of the shafts for securing a member in the bore 80.

As shown in Figure 4 a handle 84 projects transversely from the slider member and is releasably secured to it by means of a locking washer 86 which engages a toothed flat projection 88 from one end of the handle which extends through the slot 64. Figure 4 shows only one of several possible relative arrangements of the handle and clamping devices. In Figure 4 the handle is secured to the slider member so that it projects transversely from it in the opposite direction to the clamping devices and is located between the clamping devices. However it may alternatively be secured to project transversely from the slide member at a position to one side of clamping device 66 or 68, or may be secured to project co-axially from one end of the slider member as shown in Figure 7.

As illustrated in Figure 7, the end of the handle opposite to projection 88 has an internal threaded bore 90 matching the threaded projection 92 at one end of slider member 62. Therefore, instead of securing the handle transversely to the slider member as shown in Figure 4, the washer 86 may be removed and the handle attached to the threaded projection at the end of the slider member as shown in Figure 7.

The operation of the paralleling tool to align two or more attachment structures on a single prosthesis will now be described. The first attachment structure may be aligned by sight in a suitably prepared existing tooth as described above. The round projection 58 from the top of the pin member of the first attachment structure is then fitted into the bore 80 of the clamp head of one of the clamping devices 66 or 68, for example as shown in Figures 5 and 6. The attachment structure can be rotated freely in the bore 80 until the lock washer 82 is tightened against it. Thus the attachment structure can be rotated until the denture is in the correct orientation for alignment with the tooth to which it is to be secured.

A second attachment structure is then fitted in the other clamp head in the same way, with the relative positions of the clamp heads to accommodate the curve of the arch or the relative positions of the teeth to which the attachment structures are to be secured being adjusted laterally by releasing the lock washers 76 and 78 and sliding the shafts 72 along the slider member until the correct lateral spacing is reached. Mesial/distal adjustments can be made by sliding the shafts transversely through the slot 64 until the correct relative position is reached. Note that if increased distance is needed mesially/distally along the arch, one of the clamping devices may be faced in the opposite direction so as to accommodate a greater angle of curvature. The difference in lengths between the two shafts also allows a greater range of relative arch positions to be covered.

Once the correct relative position between the two clamp heads has been reached, the lock washers 76 and 78 are re-tightened. Figure 5 shows an example of this where the paralleling tool is being used to parallel two attachment structures on opposite sides of an arch. The tool can be altered to work on two teeth on the same side of an arch by attaching the handle as shown in Figure 7, with appropriate lateral and distal spacings of the clamp heads. Figure 6 illustrates the fitting of the denture 12 to an existing tooth 14 on one side of the arch using the paralleling tool.

The second existing tooth to which the second attachment structure is to be secured will also be prepared roughly by eye and suitable bonding material placed in the cut-out, before using the paralleling tool as outlined above to insert the channel member in the cut-out so that it is aligned with the first channel member in both the horizontal and vertical planes. Once seated, both channel members are then secured in place by curing the bonding material and filling any gaps in the rough cut-out. Thus the paralleling tool ensures that both attachment structures will be aligned with each other and with the path of insertion and removal of the denture, ensuring that the denture can be removed and replaced easily and that the attachment structures operate correctly to give the required slight movement of the denture on chewing.

Any additional attachment structures are aligned with the first by repeating the steps outlined above for each additional attachment, using the pin member from one of the attachment structures already seated to align the additional structures. It will be understood that the paralleling tool is not restricted to use with the attachment structure shown in Figures 1 to 3 of the drawings, but may be used to align any two part attachment structures involving pin members for sliding engagement in channel members for insertion in two or more existing teeth.

All the attachment structures on a denture may be seated before the curing step is carried out, or each structure may be secured in the respective cut-out by curving as soon as it is seated, with the pin member being removed for alignment with additional attachment structures.

The denture attachment structure and method of this invention allows substantially stress-free attachment of a prosthesis to any dentition or substitute, and allows one or more attachment structures to be mounted in the correct orientation relatively quickly, accurately and easily.

Although some preferred embodiments of the invention have been described above by way of example, it will be understood by those skilled in the field that modifications may be made to the disclosed embodiments without departing from the scope of the invention, which is defined by the appended claims.

## Claims

1. An attachment structure for securing a denture to an existing tooth or substitute, comprising:

a pin member having a head at one end and tongue means projecting from the pin member for securing it to a denture;

an open-sided channel member for securing in a cut-out in an existing tooth or tooth substitute, the channel member comprising means for receiving the pin member with a frictional sliding fit and having socket means at one end for receiving said head with a snap fit; and

said head and socket means being elongated in a direction transverse to the line of attachment of said pin member in said channel member.

2. The structure as claimed in claim 1, wherein said head and socket means are of corresponding part-cylindrical shape, with their longitudinal axes transverse to the longitudinal axes of the pin and channel members.

3. The structure as claimed in claim 1, wherein said channel member has a flat back wall opposite its open side and said pin member has a flat front face for sliding engagement with said back wall when said pin member is inserted in said channel member.

4. The structure as claimed in claim 3, wherein said channel member has inwardly turned side walls for resiliently gripping said pin member.

5. the structure as claimed in claim 3, wherein said socket means comprises a curved up projection from the lower end of said back wall, said projection being curved upwardly and inwardly and welded along at least part of its side edges to the side walls of said channel member.

6. The structure as claimed in claim 3, wherein said pin member is of part-cylindrical shape and said head comprises a transverse formation of at least partially cylindrical shape at the lower end of said pin member.

7. A method of mounting a denture assembly in an oral cavity, comprising the steps of:

forming a vertically extending cut-out in the side face of an existing cuspid or molar tooth adjacent the site at which the denture assembly is to be mounted, the cut-out corresponding in shape substantially with the shape of a channel member for mounting in the cut-out and being substantially parallel with the intended path of insertion of the denture assembly;

securing a vertically extending pin member to one end of the denture assembly by means of a tongue projecting radially from the pin member;

sliding the pin member into the channel member until a head at one end of the pin member snap fits into a corresponding socket at the end of the channel member;

placing bonding material on at least part of the exposed faces of the cut-out and corresponding faces of the channel member;

sliding the channel member carrying the denture assembly vertically into the cut-out so that the denture assembly is properly aligned in the oral cavity and the channel member is secured in the cut-out by the bonding material.

8. The method as claimed in claim 7, including the further steps of :

securing a further pin member to another end tooth of the denture assembly via a tongue projecting radially from the pin member and sliding the pin member into a corresponding channel member until a head at the end of the pin member snap fits into a corresponding socket at the lower end of the channel member;

preparing a cut-out in the side wall of a second existing tooth to which the further pin and channel members are to be secured, the second cut-out being substantially parallel with the first;

securing the first pin member to one of a pair of adjustable clamping devices slidably mounted on a slider member of a paralleling tool;

adjusting the relative positions of the pair of clamping devices until they correspond to the relative positions of the pin members on the denture assembly such that the second pin member can be secured to the other clamping device;

clamping the clamping devices in the correct relative position and securing the second pin member to the other clamping device of the pair;

placing bonding material against at least part of the corresponding surfaces of the second channel member and tooth cut-out;

mounting the denture assembly in the oral cavity using the paralleling tool to insert the second channel member in the second tooth cut-out in parallel with the path of insertion of the first channel member;

securing the second channel member in the second tooth cut-out.

9. The method as claimed in claim 8, including the additional steps of aligning additional pin and channel member structures on the denture assembly with the first pin and channel member structure using the paralleling tool.

10. A paralleling tool for use in mounting dentures in an oral cavity, the tool comprising :

an elongate slider member ;

a pair of clamping devices transversely mounted in said elongate member, each clamping device comprising a clamp head for releasably gripping an extension from a two part attachment device for securing a denture in an oral cavity, and a shaft projecting from the clamp head and slidably mounted in said slider member ;

releasable locking means for releasably securing said shafts against sliding movement along and across said slider member, and

handle means for holding said tool.

11. The tool as claimed in claim 10, wherein said slider member has longitudinal slot and said shafts project transversely through said slot.

12. The tool as claimed in claim 11, wherein said slot has opposed flat faces and said shafts are flat elongate members having teeth along their side edges, said locking means comprising lock nuts on said shafts on opposite sides of said slider member for adjustable threaded engagement with said teeth.

13. The tool is claimed in claim 10, wherein said handle means is releasably connected to said slider member and includes first securing means for securing said handle means to project transversely from said slider member and second securing means for securing said handle to project axially from one end of said slider member.

14. The tool as claimed in claim 10, wherein said shafts are of unequal length.

8

FIG. I

FIG. 2

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 347 340 (SMALLEN)<br>* page 1, left-hand column, line 8 - right-hand column, line 10; figures 1-5 * | 1,4,7 | A 61 C 13/265<br>A 61 C 19/04 |
| | --- | | |
| A | DE-U-8 428 139 (RADEMACHER)<br>* page 7, line 13 - page 8, line 7; figures 1, 2, 7, 8 * | 1-3,6 | |
| | --- | | |
| A | US-A-1 522 233 (FEINBERG)<br>* page 2, line 122 - page 3, line 69; figures 6, 7 * | 1,7 | |
| | --- | | |
| A | US-A-2 803 060 (WEISS)<br>* figures 1-6 * | 1 | |
| | --- | | **TECHNICAL FIELDS SEARCHED (Int. Cl.4)** |
| D,A | US-A-4 362 509 (SULC)<br>* figures 1-3 * | 1,7 | |
| | --- | | A 61 C 13/00<br>A 61 C 19/00 |
| A | CH-A- 546 065 (RITTER)<br>* figures 8, 9 * | 1,3 | |
| | --- | | |
| A | DE-A-1 566 198 (BILEK)<br>* page 6, line 25 - page 7, line 2 * | 7,8 | |
| | --- | | |
| A | DE-C- 360 617 (WERKENTHIN)<br>* figures 5-7 * | 10 | |
| | ---     -/- | | |

The present search report has been drawn up for all claims

| Place of search | Date of completion of the search | Examiner |
|---|---|---|
| BERLIN | 17-11-1986 | SIMON J J P |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-3 417 471 (MITCHELL)<br>* column 2, lines 25-57; figures 1-3 * | 10 | |

-----

TECHNICAL FIELDS
SEARCHED (Int. Cl.4)

The present search report has been drawn up for all claims

| Place of search | Date of completion of the search | Examiner |
|---|---|---|
| BERLIN | 17-11-1986 | SIMON J J P |